Europäisches Patentamt

European Patent Office

Office européen des brevets

(11) Publication number: **0 106 646**
**B1**

## (12) EUROPEAN PATENT SPECIFICATION

(45) Date of publication of patent specification: **28.12.88**

(21) Application number: **83306118.7**

(22) Date of filing: **10.10.83**

(51) Int. Cl.⁴: **D 06 F 58/28, G 05 D 22/02**

(54) **Improvements in or relating to clothes driers.**

(30) Priority: **11.10.82 NZ 202132**

(43) Date of publication of application:
**25.04.84 Bulletin 84/17**

(45) Publication of the grant of the patent:
**28.12.88 Bulletin 88/52**

(84) Designated Contracting States:
**AT BE CH DE FR GB IT LI LU NL SE**

(56) References cited:
**FR-A-2 018 569**
**FR-A-2 346 485**
**US-A-3 526 968**
**US-A-3 912 913**
**US-A-4 286 391**

(73) Proprietor: **FISHER & PAYKEL LIMITED**
**39 Mount Wellington Highway**
**Mount Wellington Auckland (NZ)**

(72) Inventor: **Chung Christopher**
**F/7 Dinglebank Road**
**Ellerslie Auckland (NZ)**
Inventor: **Smith, Dennis Edward**
**45 Prince Regent Drive**
**Bucklands Beach Auckland (NZ)**

(74) Representative: **Brown, John David et al**
**FORRESTER & BOEHMERT Widenmayerstrasse**
**4/I**
**D-8000 München 22 (DE)**

Courier Press, Leamington Spa, England.

**Description**

This invention relates to clothes driers.

FR-A-2 346 485 relates to a clothes dryer which includes an adjustable temperature responsive switching device arranged to switch off the heater when the exhaust temperature reaches a set value and means for automatically adjusting the said set value as a non linear function of a lapsed time, the function corresponding to an isowetness curve of exhaust temperature plotted against time for different sizes of loads of a particular type of fabric to a given degree of wetness.

US-A-3 526 968 discloses a clothes dryer which automatically stops when the clothes reach a predetermined dryness based on a predetermined trip temperature. This trip temperature is determined by sensing the temperature of the heated exhaust air and making compensation for the ambient temperature.

US-A-4 268 391 discloses a similar clothes dryer in which the trip temperature is determined by sensing the temperature of the heated exhaust air and making compensation for the heated intake air.

It is an object of the present invention to provide a clothes drier and/or a method of operating the same which will at least provide the public with a useful choice.

Accordingly in one aspect the present invention consists in a method of operating a clothes drier, wherein air is heated by a heat source and moved to an air exhaust through a rotating drum in which clothes to be dried are tumbled and dried, which method comprises selecting a desired degree of dryness thereby setting an initial control signal representing a predetermined trip temperature for cutting off the heat source at a temperature sufficiently high to ensure that a small load of clothes would substantially attain the preselected degree of dryness, sensing the temperature of the exhaust air after it has passed over at least most of the clothes in the drum, sensing ambient air temperature in a position partly receiving heat from the heated air so that the ambient temperature sensed is influenced by the heated air to produce a resultant temperature to be used as a reference temperature, determining the difference between the exhaust temperature and the reference temperature and producing a trip temperature signal representing this varying difference, reducing the predetermined trip temperature continuously with respect to time at a programmed rate and producing an adjusted control signal representing this reduced temperature whereby loads of clothes larger than the small load of clothes would be dried to substantially the same level of dryness as the small load, comparing the trip temperature signal with the adjusted control signal until the respective temperatures are substantially equal and producing a final cut-off signal when the preselected degree of dryness has been reached, the final cut-off signal cutting off the heat source.

In a further aspect the invention consists in a clothes drier (1) of the type in which air is heated and then moved through a rotating drum (6) in which clothes for drying are tumbled by rotation of the drum (6) the air being passed to an exhaust means (9) after passing through the drum (6) said clothes drier including means for setting a desired degree of dryness thereby setting an initial control signal representing a predetermined trip temperature, sensing means (16) to sense the temperature of the exhaust air after it has passed in use, over most of the clothes in the drum, a reference sensor (15), positioned to gain some heat from ambient air and some heat from the heated air into said drum (6), to sense a reference temperature dependent on a combination of ambient air and heated air into said drum (6), means to provide a trip temperature signal which is a measure of the difference between the temperature of the exhaust air and the reference temperature, signal means to give a signal when the trip temperature is substantially equal to the predetermined trip temperature, cut-off means actuable by said signal to cut-off heat to air admitted to said drum when said predetermined trip temperature is reached, and adjusting means (25, 26) to adjust said predetermined trip temperature downwards at a desired rate during drying from an initial setting, said initial trip temperature being sufficiently high as to ensure that a small load of clothes would substantially attain a preselected degree of dryness.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

One preferred form of the invention and modifications thereof will now be described with reference to the accompanying drawings in which:

Figure 1 is a diagrammatic sketch of a clothes drier;

Figure 2 is a block diagram of one form of circuitry used in applying the invention to a clothes drier such as that shown in figure I; and

Figure 3 is a block diagram of an alternative form of circuitry.

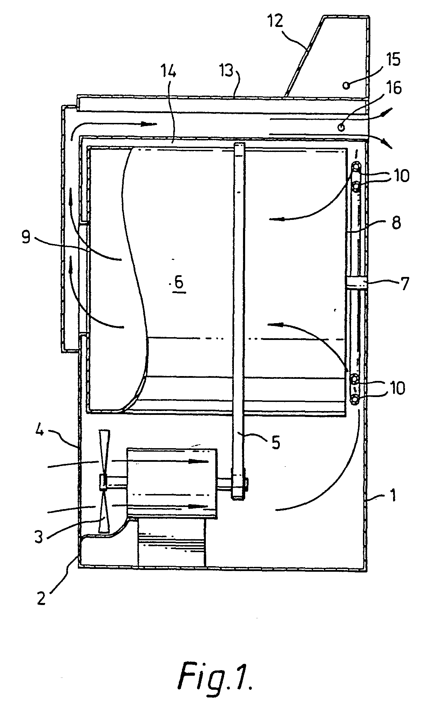

Referring to figure 1 of the drawings, a clothes drier is shown such as that described in U.K. Specification No. 1,221,343. In such a clothes drier the cabinet 1 is provided with a motor 2 which rotates a fan 3 positioned adjacent to an air inlet 4 the fan pressurizing the air inside the cabinet 1. The motor also drives a belt 5 by which a drum 6 is rotated on a supporting spindle 7. The drum 6 in which clothes to be dried are tumbled has an air inlet 8 at the back (although the air inlet may be at the front) and an air exit or exhaust 9 at the front (although the air exit may be at the rear). The air is caused to enter the drum 6 through the entrance 8 by the pressure in the cabinet 1 and after the air is heated by an annular heating element 10. Such a clothes drier has been in production for many years and is well known to those skilled in the art.

In such a clothes drier, the air, after being heated and passing through the drum, and thus over the clothes therein, changes in temperature as the clothes load dries. Typically it is warm and wet during most of the cycle, then becomes hotter as dryness nears completion. According to the present invention it is this raising of the exhaust air temperature that is used to deduce dryness of the clothes, and trip a device which switches the drier into cool-down mode and finally stop.

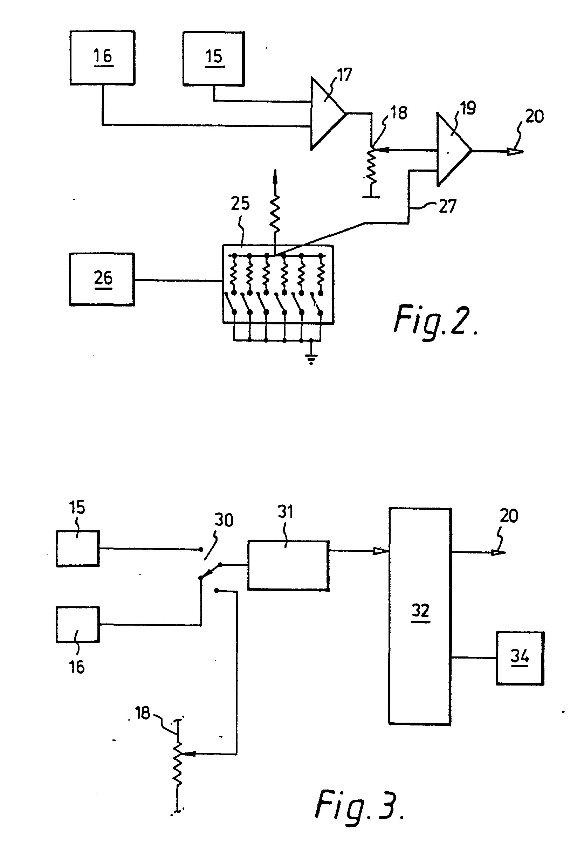

According to the present invention a clothes drier such as that described above is provided, as is shown in figure 2, with two temperature sensing elements, for example, thermistors, one or more reference temperature sensors 15 and one or more exhaust temperature sensing elements 16. These elements are each positioned in a suitable position at which the temperature is representative of the temperature of the ambient air (or alternatively the heated air flowing into the drum or a mixture of ambient air and heated air) and of the temperature of the exhaust air i.e. the air after it has passed over at least most if not all of the clothes to be dried, respectively.

The sensors 15 and 16 are connected to an amplifier 17 and through a user control 18 to a comparator 19.

The specific value of exhaust air temperature when the clothes are at a given degree of dryness varies and errors result if they are not compensated for.

We have found that variables such as ambient temperature, heater wattage and line voltage, and air throughput can be substantially compensated for in a very simple manner by positioning the reference sensor in a console 12 positioned above the top 13 of the cabinet 1, the console being a separate compartment from the pressurized cabinet interior 14. In this position the sensor 15 receives some heat from the heater plate and we found that the heat received by the sensor 15 is substantially proportioned so that the reference temperature change was substantially the same as the exhaust temperature with any change in the above variables.

As an example the reference sensor 15 is positioned so that temperature is approximately 10°C above ambient and changes directly with ambient. If the voltage changes from 230 to 250 reference temperature increases by approximately 3°C, and when the exhaust duct is restricted by a cover over 75% of its area, then the reference temperature increases by approximately 7°C.

However the exhaust temperature varies with the size of the clothes load and it is this variable that the present invention at least attempts to accommodate.

Thus in the preferred form the user is able to adjust the control 18 which is calibrated (perhaps a little arbitrarily) in "degree of dryness", and this adjusts an initial setting of a signal from the temperature sensitive device 16 in the exhaust air stream which in the preferred form is compared with the reference temperature. It will be apparent however that a less desirable construction could be used in which the exhaust temperature alone would give a reasonable result. When there is a predetermined difference between the temperatures of sensors 15 and 16 (herein referred to as the trip temperature) the comparator 19 is signalled to switch off heat to the drier via lead 20 and the drier goes into a cool-down and eventually stopping mode using any known circuitry.

With a small load of clothes, the exhaust air is hotter for a given degree of dryness, because, we believe, the operation is less energy efficient and probably much of the heated air fails to contact the clothes and emerges hotter and dryer.

The user control 18 is operated by the user to make a temperature difference setting according to a scale marked "damp, normal, dry, super dry" or any other convenient marking. This user control biases "the trip temperature" settings to an initial setting high enough as to result in a small load of clothes attaining a substantially predetermined degree of dryness.

The invention therefore also provides an automatic system to control the trip temperature settings dependent on load size.

Accordingly because a small load dries in a shorter time than a large load and because a small load results in a higher exhaust temperature than the exhaust temperature which results from a larger load dried to substantially the same degree, the following circuitry is adopted.

Referring to figure 2 again, a series of switches and resistors 25 are provided controlled by a clock 26 and the output from the switches 25 supplied to the comparator 19 by lead 27. As stated above the user setting 18 initially provides for a relatively high trip temperature to be needed before the drier is switched to cool down mode. The user set signal which causes the comparator 19 to actuate switching off of the heating of the drier through lead 20 is modified by the clock controlled switches and resistor control signals sent to the comparator 19, so that as time progresses as is measured by the clock 26, the control signal results in a reduction of required trip temperature to switch off the drier. Thus it will be apparent that as drying continues, if the exhaust temperature does not reach the initial user set temperature difference the clock 26 and switch circuit 25 progressively reduce the trip temperature necessary to switch off drying and the drier continues to run until exhaust temperature reaches the lowered trip temperature setting from the clock control signals and heat is cut off. Thus the trip temperature reached is progressively reduced at a desired rate. The rate depending on the number of resistors and switches and the time interval between progressive switching operations.

As an example of the parameters necessary, if a load of say 500g is dried to achieve a 1% moisture content, the trip temperature would need to be of the order of 30°C (exhaust temperature at sensor 16 about 60°C and referenced temperature at reference sensor 15 about 30°C). Accordingly if 500g is accepted as being a minimum load likely to be placed in the drier then the initial trip temperature setting to 1% moisture would be 60°C. If the user control is set to say "dry" and 1% moisture is regarded as "super dry" then a dryness of about 8% would be achieved if the trip temperature reaches 20°C and thus the user control may vary the trip temperature to be 20°C when the user control is on "dry" and other reductions in minimum load temperatures would be achieved by other settings of the user control 18.

Now if a load of say 4kg is placed in the drier to dry these to 1% moisture condition, i.e. "super dry" then the trip temperature of 20°C would be achieved in about 120mins. Accordingly the clock 26 and switching device 25 would be arranged to give a bias downwardly from 30°C to 20°C trip temperature over a period of 120mins.

The use of the above construction is accordingly fully described as follows:

The user places clothes to be dried in the drum 6, and sets the user control 18 to a desired degree of dryness, e.g. "dry". The clothes drier is then started up and heating occurs. To take account of changes in ambient or inlet air temperature, ambient temperature or inlet air temperature or a mixed temperature as above outlined is sensed by reference temperature sensor 15. The exhaust temperature is sensed by sensor 16. The amplifier 17 receives these two signals, compares them and passes out a signal e.g. a voltage, through the user control 18 to the comparator 19. At the same time the clock 26 is started up and at suitable intervals of time a switch in the resistor switch box 25 is controlled to alter the trip temperature setting recognised by the comparator 19 as being the desired temperature at which heating of the entering air is to be switched off. After heating has continued for a period of time dependent on the clothes load and degree of intial dampness the signal received from the amplifier 17 and the clock control signal received from the switch and resistor box 25 will be compared by the comparator 19 and when the comparison meets a desired level switching off of heating to the drier occurs, the drier goes into a cooling mode and ultimately, through a further control, stopping of the tumbling of the drier is effected.

The construction shown in figure 2 is of an analogue type of circuitry in which there is direct comparison of resistance values or voltages by the comparator 19. In figure 3 there is shown a digital circuit which achieves the same result. Thus signals from the reference temperature sensor 15 and the exhaust temperature sensor 16 and the user control 18 are switched by a multiplexing switch 30 to an analogue to digital convertor 31. The digital pulses are then supplied to a microprocessor 32. A clock 34 is provided and in association with the microprocessor 32 controls the trip temperature at a desired rate so that the same result is achieved as with the construction of figure 3.

From the foregoing it will be seen that an automatic control of resultant clothes drying is obtained by the invention in simple yet effective manner. The housewife need only select a degree of dryness and although there is a certain degree of arbitrariness in this selection, the operator after a little experience will know within reasonable limits the degree of dryness likely to be obtained by a particular setting and on subsequent loading the drier as above described will substantially regardless of the load of clothes placed in the drier, attain that desired degree of dryness as set by the user.

The features disclosed in the foregoing description, in the following claims and/or in the accompanying drawings may, both separately and in any combination thereof, be material for realising the invention in diverse forms thereof.

**Claims**

1. A method of operating a clothes drier (1), wherein air is heated by a heat source and moved to an air exhaust (9) through a rotating drum (6) in which clothes to be dried are tumbled and dried, which method comprises selecting a desired degree of dryness thereby setting an initial control signal representing a predetermined trip temperature for cutting off the heat source at a temperature sufficiently high to ensure that a small load of clothes would substantially attain the preselected degree of dryness, sensing the temperature of the exhaust air after it has passed over at least most of the clothes in the drum, sensing ambient air temperature in a position partly receiving heat from the heated air so that the ambient temperature sensed is influenced by the heated air to produce a resultant temperature to be used as a reference temperature, determining the difference between the exhaust temperature and the reference temperature and producing a trip temperature signal representing this varying difference, reducing the predetermined trip temperature continuously with respect to time at a programmed rate and producing an adjusted control signal representing this reduced temperature whereby loads of clothes larger than the small load of clothes would be dried to substantially the same level of dryness as the small load, comparing the trip temperature signal with the adjusted control signal until the respective temperatures are substantially equal and producing a final cut-off signal when the preselected degree of dryness has been reached, the final cut-off signal cutting off the heat source.

2. A method as claimed in claim 1 which includes the step of manually setting said initially set temperature.

3. A method as claimed in claim 1 or 2 which includes the step of converting sensed temperatures into measurable parameters and controlling a resistance means relative to time so that said initially set temperature at which heat cut-off occurs is reduced.

4. A method as claimed in claim 3 which includes the step of controlling a series of switched resistors (25) to vary said initially set temperature.

5. A method as claimed in claim 1 or 2 which includes the steps of converting signals resulting from sensing said exhaust temperature (16) into digital pulses feeding such pulses to a microprocessor (32), converting signals dependent on the position of a user control (18) into digital pulses feeding said pulses to said microprocessor (32) and controlling the pulses by a clock (34) so that said initially set temperature to be reached for cut-off is progressively reduced.

6. A clothes drier (1) of the type in which air is heated and then moved through a rotating drum (6) in which clothes for drying are tumbled by rotation of the drum (6), the air being passed to an exhaust means (9) after passing through the drum (6) said clothes drier including means for setting a desired degree of dryness thereby setting an initial control signal representing a predetermined trip temperature, sensing means (16) to sense the temperature of the exhaust air after it has passed in use, over most of the clothes in the drum, a reference sensor (15), positioned to gain some heat from ambient air and some heat from the heated air into said drum (6), to sense a reference temperature dependent on a combination of ambient air and heated air into said drum (6), means to provide a trip temperature signal which is a measure of the difference between the temperature of the exhaust air and the reference temperature, signal means to give a signal when the trip temperature is substantially equal to the predetermined trip temperature, cutoff means actuable by said signal to cut-off heat to air admitted to said drum when said predetermined trip temperature is reached, and adjusting means (25, 26) to adjust said predetermined trip temperature downwards at a desired rate during drying from an initial setting, said initial trip temperature being sufficiently high as to ensure that a small load of clothes would substantially attain a preselected degree of dryness.

7. A clothes drier as claimed in claim 6 wherein said reference sensor is positioned in a console (12) above said cabinet and substantially vertically above said heater.

8. A clothes drier as claimed in claim 6 or 7 wherein a manual control (18) is provided whereby said initial temperature is settable within limits by an operator.

9. A clothes drier as claimed in claim 6, 7 or 8 wherein said automatic adjusting means comprise a clock controlled signal means, signals from which are varied by a clock (26) therein as drying progresses and a comparator (19) is provided to which signals from said exhaust air temperature sensor (16) and said clock controlled signal means are passed, a desired comparison resulting in actuation of said cut off means.

10. A clothes drier as claimed in claim 9 wherein said automatic adjusting means comprise a variable resistance means (25) and said clock, said clock varying said variable resistance means (25) at a desired rate to vary said predetermined exhaust temperature.

11. A clothes drier as claimed in claim 9 wherein said automatic adjusting means comprise an analogue to digital converter (31) to convert signals from said exhaust temperature sensor and said reference temperature sensor to digital pulse form, and said comparator comprises a microprocessor (32) to process such digital pulses.

12. A clothes drier as claimed in claim 11 when dependent on claim 6 wherein said analogue to digital converter (31) converts signals from said reference temperature sensor (15) to digital pulse form.

13. A clothes drier as claimed in claim 11 or 12 wherein multiplexing means (30) are provided whereby signals from said sensors (15,16) are multiplexed into said comparator (32).

14. A clothes drier as claimed in claim 11 or 12 when dependent on claim 15 wherein said manual control (18) is connected to said microprocessor (32) through an analogue to digital converter and digital pulses therefrom are controlled by said clock (34) at a predetermined rate.

15. A clothes drier is claimed in claim 14 when dependent on claim 11 wherein said multiplexing means (30) also multiplex signals from said manual control (18) into said microprocessor (32).

## Patentansprüche

1. Verfahren zum Betreiben eines Wäschetrockners (1), bei dem Luft von einer Wärmequelle erwärmt und durch eien Drehtrommel (6), in der zu trocknende Wäsche verwirbelt und getrocknet wird, zu einem Auslaß (9) bewegt wird unter Wählen des gewünschten Trocknungsgrades durch Einstellen eines einer vorgegebenen Schalttemperatur entsprechenden Anfangssteuersignals zum Abschalten der Wärmequelle bei einer Temperatur, die ausreichend ist um sicherzustellen, daß eine kleine Beschickungsmenge an Wäsche im wesentlichen den vorgewählten Trocknungsgrad erreicht, Messen der Temperatur der Ablaßluft, nachdem diese über wenigstens die meiste Wäsche in der Trommel geführt worden ist, Messen der Umgebungstemperatur an einem Ort, der teilweise die Wärme der erwärmten Luft aufnimmt, so daß die gemessene Umgebungstemperatur von der erwärmten Luft beeinflußt wird zur Erzeugung einer sich ergebenden Temperatur, die als Bezugstemperatur verwendet wird, Bestimmen des Unterschiedes zwischen der Ablaßtemperatur und der Bezugstemperatur und Erzeugen eines Schalttemperatursignals, das dieser sich ändernden Temperatur entspricht, Verringern der vorbestimmten Schalttemperatur kontinuierlich bezüglich des Zeitpunktes in einer programmierten Rate und Erzeugen eines justierten Steuersignals, das dieser reduzierten Temperatur entspricht, bei der eine Beschickungsmenge an Wäsche, die größer ist als die kleine Beschickungsmenge an Wäsche auf im wesentlichen dasselbe Maß von Trockenheit wie die kleine Beschickungsmenge getrocknet werden würde, Vergleichen des Schalttemperatursignals mit dem justierten Steuersignal, bis die jeweiligen Temperaturen im wesentlichen gleich sind, und Erzeugen eines Schlußabschaltsignals, wenn das vorgewählte Ausmaß von Trockenheit erreicht worden ist, wobei das Schlußabschaltsignal die Wärmequelle abschaltet.

2. Verfahren nach Anspruch 1, wobei die anfangs eingestellte Temperatur manuell eingestellt wird.

3. Verfahren nach Anspruch 1 und Anspruch 2, wobei die gemessenen Temperaturen in meßbare Parameter gewandelt werden und ein Widerstandsmittel gesteuert wird bezüglich der Zeit, so daß die anfangs eingestellte Temperatur, bei der das Abschalten der Wärme auftritt, reduziert wird.

4. Verfahren nach Anspruch 3, wobei eine Reihe von geschalteten Widerständen (25) gesteuert werden, um die anfangs eingestellte Temperatur zu variieren.

5. Verfahren nach Anspruch 1 und Anspruch 2, wobei die Signale, die sich aus der Messung der Ablaßtemperatur (16) ergeben, in digitale Signale umgewandelt werden, Führen dieser Impulse zu einem Mikroprozessor (32), Wandeln der Signale in Abhängigkeit von der Stellung eines dem Verwender zugänglichen Reglers (18) in digitale Impulse, Führen der Impulse zu dem Mikroprozessor (32) und Steuern der Impulse durch einen Taktgeber (34), so daß die anfangs eingestellte. zum Abschalten zu erreichende Temperatur fortschreitend reduziert wird.

6. Wäschetrockner (1) von der Art, bei der Luft erwärmt und sodann durch eine Drehtrommel (6), in der zu trocknende Wäsche durch die Drehung der Trommel (6) verwirbelt wird, bewegt und sodann zu einem Auslaß (9) geführt wird nach Passieren der Trommel (6), wobei der Wäschetrockner Mittel zum Einstellen eines gewünschten Trocknungsgrades durch Einstellen eines Anfangssteuersignals, das einer vorgegebenen Schalttemperatur entspricht, Meßmittel (16) zum Messen der Temperatur der abgelassenen Luft, nachdem diese bei Verwendung über die meiste Wäsche in der Trommel geführt ist, einen Bezugssensor (15), der angeordnet ist zum Aufnehmen einiger Wärme der Umgebungstemperatur und einiger Wärme der erwärmten Luft in der Trommel (6), um eine Bezugstemperatur in Abhängigkeit einer Kombination der Umgebungsluft und der erwärmten Luft in der Trommel (6) zu messen, Mittel zum Schaffen eines Schalttemperatursignals, das ein Maß der Differenz zwischen der Temperatur der Ablaßluft und der Bezugstemperatur ist, Signalmittel zum Abgeben eines Signals, wenn die Schalttemperatur im wesentlichen gleich der vorbestimmten Schalttemperatur ist, Abschaltmittel, die durch das Signal zum Abschalten der Erwärmung der der Trommel zuzuführenden Luft betätigbar sind, wenn die vorgegebene Schalttemperatur erreicht wird, und Einstellmittel (25, 26) zum Einstellen der vorgegebenen Schalttemperatur nach unten um eine gewünschte Rate während des Trocknens von einer Anfangseinstellung, wobei die Anfangsschalttemperatur ausreichend hoch ist um sicherzustellen, daß eine kleine Beschickungsmenge an Wäsche einen vorgewählten Trocknungsgrad im wesentlichen erreicht, aufweist.

7. Wäschetrockner nach Anspruch 6, wobei der Bezugssensor in einer Konsole (12) oberhalb des Gehäuses und im wesentlich vertikal oberhalb des Heizelements angeordnet ist.

8. Wäschetrockner nach Anspruch 6 oder 7, wobei eine manuelle Steuerung (18) vorgesehen ist, durch die die Anfangstemperatur innerhalb von Grenzen durch die Bedienperson einstellbar ist.

9. Wäschetrockner nach Anspruch 6, 7 oder 8, wobei das automatische Justiermittel ein von einem Taktgeber gesteuertes Signalmittel aufweist, dessen Signale durch einen Taktgeber (26) variiert werden, wenn der Trockenvorgang fortschreitet, und wobei ein Komparator (19) vorgesehen ist, zu dem Signale von dem Temperatursensor (16) für die Ablaßluft und dem Taktgeber gesteuerten Signalmittel geführt werden, woraus sich ein gewünschter Vergleich bei der Betätigung der Abschaltmittel ergibt.

10. Wäschetrockner nach Anspruch 9, wobei die automatischen Einstellmittel einen variablen Widerstand (25) und einen Taktgeber aufweisen, wobei der Taktgeber den variablen Widerstand (25) in einer gewünschten Rate ändert, um die vorgegebene Ablaßtemperatur zu variieren.

11. Wäschetrockner nach Anspruch 9, wobei die automatischen Einstellmittel einen Analog/Digital-Wandler (31) aufweisen zum Wandeln der Signale von dem Ablaßtemperatursensor und dem Bezugstemperatursensor in eine digitale Impulsform, der einen Mikroprozessor (32) zur Verarbeitung derartiger Digitalimpulse beinhaltet.

12. Wäschetrockner nach Anspruch 11 in Abhängigkeit von Anspruch 6, wobei ein Analog/Digital-Wandler (31) Signale von dem Bezugstemperatursensor (15) in eine digitale Impulsform wandelt.

13. Wäschetrockner nach Anspruch 11 oder 12, wobei Multiplexer (30) vorgesehen sind, durch die Signale von dem Sensor (15, 16) in den Komparator (32) multiplext werden.

14. Wäschetrockner nach Anspruch 11 oder Anspruch 12 in Abhängigkeit von Anspruch 15, wobei die manuelle Steuerung (18) mit dem Mikroprozessor (32) durch einen Analog/Digital-Wandler verbunden ist und Digitalimpulse von diesem durch den Taktgeber (34) in einer vorgegebenen Rate gesteuert werden.

15. Wäschetrockner nach Anspruch 14 in Abhängigkeit von Anspruch 11, wobei der Multiplexer (30) weiter Signale von der manuellen Steuerung (18) in den Mikroprozessor (32) multiplext.

## Revendications

1. Un procédé de commande d'un sèche-linge (1), selon lequel de l'air est chauffé par une source de chaleur et est déplacé vers une sortie d'air (9) au travers d'un tambour rotatif (6) dans lequel des pièces de linge à sécher sont brassées et séchées, ledit procédé consistant à sélectionner un degré désiré de siccité en produisant ainsi un signal initial de commande représentant une température de déclenchement prédéterminée pour arrêter la source de chaleur à une température suffisamment élevée pour faire en sorte qu'une petite charge de linge atteigne sensiblement le degré de siccité présélectionné, à détecter la température de l'air de sortie après qu'il a passé sur au moins la majeure partie du linge se trouvant dans le tambour, à détecter la température de l'air ambiant dans une position recevant partiellement de la chaleur provenant de l'air chauffé de telle sorte que la température ambiante détectée soit influencée par l'air chauffé pour produire une température résultante à utiliser comme une température de référence, à déterminer la différence entre la température de sortie et la température de référence et à produire un signal de température de déclenchement représentant cette différence variable, à réduire de façon continue la température de déclenchement prédéterminée en fonction du temps à une vitesse programmée et à produire un signal de commande réglé représentant cette température réduite, afin que des charges de linge supérieures à la petite charge de linge soient séchées sensiblement au même niveau de siccité que la petite charge, à comparer le signal de température de déclenchement avec le signal de commande réglé jusqu'à ce que les températures respectives soient sensiblement égales et à produire un signal d'arrêt final quand le degré présélectionné de siccité a été atteint, ce signal d'arrêt final assurant l'arrêt de la source de chaleur.

2. Un procédé tel que revendiqué dans la revendication 1, qui comprend l'étape de réglage manuel de ladite température réglée initialement.

3. Un procédé tel que revendiqué dans la revendication 1 ou 2, qui comprend l'étape de conversion de températures détectées en paramètres mesurables et de commandes d'un moyen formant résistance en fonction du temps de telle sorte que ladite température réglée initialement, à laquelle se produit un arrêt de chauffage, soit réduite.

4. Un procédé tel que revendiqué dans la revendication 3, qui comprend l'étape de commande d'une série de résistances commandées (25) pour faire varier ladite température réglée initialement.

5. Un procédé tel que revendiqué dans la revendication 1 ou 2, qui comprend les étapes de conversion de signaux résultant d'une détection de ladite température de sortie (16) en impulsions numériques d'applications desdites impulsions à un microprocesseur (32), de conversion de signaux qui sont fonctions de la position d'une commande d'utilisateur (18) en impulsions numériques, d'application desdites impulsions audit microprocesseur (32) et de commande des impulsions par une horloge (34) de manière à réduire progressivement ladite température réglée initialement et provoquant un arrêt quand elle est atteinte.

6. Un sèche-linge (1) du type dans lequel de l'air est chauffé et est ensuite déplacé au travers d'un tambour rotatif (6) dans lequel des pièces de linge à sécher sont brassées par rotation du tambour (6), l'air étant canalisé jusqu'à un moyen de sortie (9) après avoir passé au travers du tambour (6), ledit sèche-linge comprenant des moyens pour régler un degré désiré de siccité en vue de produire un signal initial de commande représentant une température de déclenchement prédéterminée, un moyen de détection (16) pour détecter la température de l'air de sortie après qu'il a passé, en service, sur la plupart des pièces de linge se trouvant dans le tambour, un détecteur de température de référence (15), positionné de manière à recevoir de la chaleur provenant de l'air ambiant et de la chaleur provenant de l'air chauffé se trouvant dans le tambour (6), afin de détecter une température de référence en fonction d'une combinaison d'air ambiant et d'air chauffé se trouvant dans ledit tambour (6), un moyen pour produire un signal de température de déclenchement qui est une mesure de la différence entre la température de l'air de sortie et la température de référence, un générateur de signaux pour produire un signal quand la température de déclenchement est sensiblement égale à la température de déclenchement prédéterminée, un moyen d'arrêt pouvant être actionné par ledit signal pour arrêter le chauffage de l'air introduit dans ledit tambour quand ladite température de déclenchement prédéterminée est atteinte, et des moyens d'ajustement (25, 26) pour ajuster ladite température de déclenchement prédéterminée en la réduisant à une vitesse désirée en cours de séchage à partir d'un réglage initial, ladite température initiale de déclenchement étant suffisamment haute pour faire en sorte qu'une petite charge de linge atteigne sensiblement un degré présélectionné de siccité.

7. Un sèche-linge tel que revendiqué dans la revendication 6, dans lequel ledit détecteur de température de référence est positionné dans une console (12) au-dessus dudit coffre et sensiblement verticalement au-dessus dudit dispositif de chauffage.

8. Un sèche-linge tel que revendiqué dans la revendication 6 ou 7, dans lequel il est prévu une commande manuelle (18) de façon à pouvoir régler ladite température initiale dans des limites définies par un opérateur.

9. Un sèche-linge tel que revendiqué dans la revendication 6, 7 ou 8, dans lequel ledit moyen de réglage automatique comprend un générateur de signaux commandé par horloge, dont les signaux sont modifiés par une horloge (26) à mesure que le séchage progresse et il est prévu un comparateur (19) auquel sont appliqués les signaux provenant dudit détecteur (16) de température d'air de sortie et dudit générateur de signaux commandé par horloge, une comparaison désirée provoquant l'actionnement dudit moyen d'arrêt.

10. Un sèche-linge tel que revendiqué dans la revendication 9, dans lequel ledit moyen de réglage automatique comprend un moyen à résistance variable (25) et ladite horloge, ladite horloge faisant varier ledit moyen à résistance variable (25) à une allure désirée pour faire varier ladite température de sortie prédéterminée.

11. Un sèche-linge tel que revendiqué dans la revendication 9, dans lequel ledit moyen de réglage automatique comprend un convertisseur analogique-numérique (31) pour convertir des signaux provenant dudit détecteur de température de sortie et dudit détecteur de température de référence sous la forme d'impulsions numériques, et ledit comparateur comprend un microprocesseur (32) pour traiter lesdites impulsions numériques.

12. Un sèche-linge tel que revendiqué dans la revendication 11, quand elle est dépendante de la revendication 6, dans lequel ledit convertisseur analogique-numérique (31) convertit des signaux provenant dudit détecteur de température de référence (15) sous la forme d'impulsions numériques.

13. Un sèche-linge tel que revendiqué dans la revendication 11 ou 12, dans lequel il est prévu des moyens de multiplexage (30) de façon que des signaux provenant desdits détecteurs (15, 16) soient multiplexés dans ledit comparateur (32).

14. Un sèche-linge tel que revendiqué dans la revendication 11 ou 12, lorsqu'elles sont dépendantes de la revendication 15, dans lequel ladite commande manuelle (18) est reliée audit microprocesseur (32) par l'intermédiaire d'un convertisseur analogique-numérique et des impulsions numériques sortant de celui-ci sont commandées par ladite horloge (34) à une allure prédéterminée.

15. Un sèche-linge tel que revendiqué dans la revendication 14, quand elle est dépendante de la revendication 11, dans lequel lesdits moyens de multiplexage (30) assurent également le multiplexage de signaux transmis de ladite commande manuelle (18) audit microprocesseur (32).

*Fig.1.*

Fig.2.

Fig.3.